(19) **Europäisches Patentamt / European Patent Office / Office européen des brevets**

(11) **EP 2 364 566 B1**

(12) **EUROPEAN PATENT SPECIFICATION**

(45) Date of publication and mention
of the grant of the patent:
**05.06.2013 Bulletin 2013/23**

(51) Int Cl.:
**H04W 52/34** *(2009.01)*　　**H04W 52/36** *(2009.01)*

(21) Application number: **09749086.6**

(22) Date of filing: **03.11.2009**

(86) International application number:
**PCT/EP2009/064533**

(87) International publication number:
**WO 2010/060752 (03.06.2010 Gazette 2010/22)**

(54) **METHODS, APPARATUSES, SYSTEM, RELATED COMPUTER PROGRAM PRODUCT AND DATA STRUCTURE FOR POWER CONTROL AND RESOURCE ALLOCATION**

VERFAHREN, VORRICHTUNGEN, SYSTEM, DIESBEZÜGLICHES COMPUTERPROGRAMMPRODUKT UND DATENSTRUKTUR ZUR LEISTUNGSREGELUNG UND BETRIEBSMITTELVERGABE

PROCÉDÉS, DISPOSITIFS, SYSTÈME, PRODUIT DE PROGRAMME INFORMATIQUE ET STRUCTURE DE DONNÉES ASSOCIÉS POUR LE CONTRÔLE DE L'ALIMENTATION ET L'AFFECTATION DE RESSOURCES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.11.2008 EP 08168217**

(43) Date of publication of application:
**14.09.2011 Bulletin 2011/37**

(73) Proprietor: **Nokia Siemens Networks Oy
02610 Espoo (FI)**

(72) Inventors:
 • **BALL, Carsten
  81375 München (DE)**
 • **MUELLNER, Robert
  81479 München (DE)**
 • **ROESSEL, Sabine
  81739 München (DE)**

(56) References cited:
  **WO-A1-2008/013080　　WO-A2-2007/149616
  WO-A2-2008/120159　　US-A1- 2007 091 983
  US-B1- 7 136 654**

**Description**

FIELD OF THE INVENTION

Examples of the present invention relate to power control and resource allocation. More specifically, the examples of the present invention relate to methods, apparatuses, a system, a related computer program product and a data structure for power control and resource allocation. Examples of the present invention may be applicable to radio communication networks.

BACKGROUND

Frequency spectrum for radio communication is a scarce resource. For this reason, existing technologies including third generation partnership project/3GPP2 (3GPP/3GPP2) second generation/third generation (2G/3G) technologies (such as global system for mobile communication/enhanced data rates for global evolution (GSM/EDGE), code division multiple access 2000 (CDMA2000™) or wideband CDMA (WCDMA)) as well as other 2G narrowband radio technologies are subsequently substituted by more spectrally efficient broadband technologies including but not limited to 3GPP long term evolution (LTE).

While LTE adheres to rather relaxed spectrum emission mask (SEM) and adjacent channel leakage requirements (ACLR), LTE may create challenges in coexistence situations with existing technologies, such as WCDMA or GSM and other 2G narrowband technologies including e.g. public safety in the U.S. or transportation communication in Japan.

E.g. in LTE Release 8 (Rel-8), uplink (UL) power control is supported e.g. for the physical uplink shared channel (PUSCH), the physical uplink control channel (PUCCH), and for the sounding reference symbol (SRS). Consistently, there is also a power ramp-up procedure for the physical random access channel (PRACH).

The same power control principles are used for PUSCH, PUCCH, and SRS, possibly with some specific differences in the power control formulae. Open loop and closed loop power control may be provided in all cases.

The maximum UE transmit power is limited by a general maximum value $P_{max}$ which is broadcast and valid per LTE cell. It is to be noted that the term "broadcast" may also comprise e.g. "signaling via RRC" and also "Pmax defined by a UE class, i.e. without signaling from network". For instance, the open loop and/or closed loop power control formula for PUSCH yields for the UE transmit power P(i) in the i-th transmission time interval (TTI) :

$$P(i) = \min \left\{ P_{max}, P_{0\_PUSCH} (j) + 10 \cdot \log_{10} M_{PUSCH} (i) + \alpha \cdot PL + \Delta_{TF} (i) + f(i) \right\}$$

equation (1)

$P_{max}$ is the maximum UE transmit power broadcast e.g. for the LTE cell. $P_{0\_PUSCH}$ (j) is an offset parameter for the j-th re-transmission type configuration, $M_{PUSCH}$ (i) is the number of allocated physical resource blocks (PRBs) in i-th TTI, $\alpha$ is the path-loss compensation factor, PL is the path-loss calculated by the UE, $\Delta_{TF}$(i) is a transport format dependent power offset disabled / enabled via radio resource control (RRC) signaling, and f(i) is an (optional) closed-loop correction with an absolute or relative de-/increase or maintenance of current transmit power.

In consideration of the above, according to examples of the present invention, methods, apparatuses, a system, a related computer program product and a data structure for power control and resource allocation are provided.

According to an example of the present invention, in a first aspect, this object is for example achieved by a method comprising:

transmitting, to each selected one of a plurality of terminals, a network control message comprising a plurality of limit values, each of the limit values being related to a first network communication parameter in relation to a second network communication parameter and being individually set for the selected terminal, based on a detected communication condition of each one of the plurality of terminals.

According to further refinements of the example of the present invention as defined under the above first aspect,

- the method further comprises selecting one or more out of the plurality of terminals based on the detected communication condition;
- the method further comprises setting the plurality of limit values based on the detected communication condition of the plurality of terminals;

- the method further comprises detecting the communication condition of each one of the plurality of terminals;
- the detecting further comprises receiving one of a power headroom report, a received signal strength indication and a timing advance information;
- the method further comprises allocating a communication resource for the plurality of terminals based on the detected communication condition;
- the allocating further comprises delaying of allocation;
- the method further comprises monitoring the detected communication condition and, if the monitored communication condition has changed, changing the plurality of set limit values according to the changed communication condition.

According to an example of the present invention, in a second aspect, this object is for example achieved by a method comprising:

configuring a terminal according to a first network communication parameter in relation to a second network communication parameter based on a received network control message comprising a plurality of limit values, each of the limit values being related to the first network communication parameter in relation to the second network communication parameter and being individually set for the terminal.

According to further refinements of the example of the present invention as defined under the above second aspect,

- the method further comprises receiving the network control message from a base station;
- the method further comprises acknowledging successful receipt of the network control message to the base station;
- the method further comprises transmitting one of a power headroom report, a received signal strength indication and a timing advance information.

According to further refinements of the example of the present invention as defined under the above first and second aspects,

- the network control message is a radio resource control system information message;
- the radio resource control system information message is transmitted via a physical downlink shared channel;
- the radio resource control system information message refers to configuration parameters for power control and resource allocation for one of a physical uplink shared channel, a physical uplink control channel and a sounding reference symbol channel;
- the set limit values are used in an uplink direction from the terminals to a base station;
- the first network communication parameter is a transmitting power of each one of the plurality of terminals;
- the second network communication parameter is a frequency band to be used by each one of the plurality of terminals;
- one of the limit values is broadcast to each one of the plurality of terminals, and the remaining limit values are set and transmitted individually in each network control message;
- a terminal entering a cell surrounding a base station is set to the highest available limit value;
- the limit value set for a given terminal is set higher as the detected communication condition is determined to be less sufficient;
- the limit value set for a given terminal is set lower as the detected communication condition is determined to be more sufficient;
- the limit value for a transmitting power set for a given terminal is set higher as a frequency band related to the limit value is determined to be further away from a forbidden frequency band;
- the limit value for a transmitting power set for a given terminal is set lower as a frequency band related to the limit value is determined to be closer to a forbidden frequency band.

According to an example of the present invention, in a third aspect, this object is for example achieved by an apparatus comprising:

means for transmitting, to each selected one of a plurality of terminals, a network control message comprising a plurality of limit values, each of the limit values being related to a first network communication parameter in relation to a second network communication parameter and being individually set for the selected terminal, based on a detected communication condition of each one of the plurality of terminals.

According to further refinements of the example of the present invention as defined under the above third aspect,

- the apparatus further comprises means for selecting one or more out of the plurality of terminals based on the detected communication condition;
- the apparatus further comprises means for setting the plurality of limit values based on the detected communication condition of the plurality of terminals;
- the apparatus further comprises means for detecting the communication condition of each one of the plurality of terminals;
- the means for detecting further comprises means for receiving configured to receive one of a power headroom report, a received signal strength indication and a timing advance information;
- the apparatus further comprises means for allocating a communication resource for the plurality of terminals based on the detected communication condition;
- the means for allocating further comprises means for delaying of allocation;
- the apparatus further comprises means for monitoring the detected communication condition and, means for changing, if the monitored communication condition has changed, the plurality of set limit values according to the changed communication condition.

According to an example of the present invention, in a fourth aspect, this object is for example achieved by an apparatus comprising:

means for configuring a terminal according to a first network communication parameter in relation to a second network communication parameter based on a received network control message comprising a plurality of limit values, each of the limit values being related to the first network communication parameter in relation to the second network communication parameter and being individually set for the terminal.

According to further refinements of the example of the present invention as defined under the above fourth aspect,

- the apparatus further comprises means for receiving the network control message from a base station;
- the apparatus further comprises means for acknowledging successful receipt of the network control message to the base station;
- the apparatus further comprises means for transmitting one of a power headroom report, a received signal strength indication and a timing advance information.

According to further refinements of the example of the present invention as defined under the above third and fourth aspects,

- the network control message is a radio resource control system information message;
- the radio resource control system information message is transmitted via a physical downlink shared channel;
- the radio resource control system information message refers to configuration parameters for power control and resource allocation for one of a physical uplink shared channel, a physical uplink control channel and a sounding reference symbol channel;
- the set limit values are used in an uplink direction from the terminals to a base station;
- the first network communication parameter is a transmitting power of each one of the plurality of terminals;
- the second network communication parameter is a frequency band to be used by each one of the plurality of terminals;
- one of the limit values is broadcast to each one of the plurality of terminals, and the remaining limit values are set and transmitted individually in each network control message;
- a terminal entering a cell surrounding a base station is set to the highest available limit value;
- the limit value set for a given terminal is set higher as the detected communication condition is determined to be less sufficient;
- the limit value set for a given terminal is set lower as the detected communication condition is determined to be more sufficient;
- the limit value for a transmitting power set for a given terminal is set higher as a frequency band related to the limit value is determined to be further away from a forbidden frequency band;
- the limit value for a transmitting power set for a given terminal is set lower as a frequency band related to the limit value is determined to be closer to a forbidden frequency band;
- at least one, or more of means for transmitting, means for selecting, means for setting, means for detecting, means for receiving, means for allocating, means for delaying, means for monitoring, means for changing, means for configuring, means for acknowledging and the apparatus is implemented as a chipset or module.

According to an example of the present invention, in a fifth aspect, this object is for example achieved by a system comprising:

an apparatus according to the above third aspect;
and

an apparatus according to the above fourth aspect.

According to an example of the present invention, in a sixth aspect, this object is for example achieved by a computer program product comprising code means for performing a method according to the above first and second aspects when run on a processing means or module.

According to an example of the present invention, in a seventh aspect, this object is for example achieved by a data structure comprising:

a network control message comprising a plurality of limit values, each of the limit values being related to a first network communication parameter in relation to a second network communication parameter and being individually set for a selected terminal.

According to further refinements of the example of the present invention as defined under the above seventh aspect,

- the network control message is a radio resource control system information message;
- the radio resource control system information message is transmitted via a physical downlink shared channel;
- the radio resource control system information message refers to configuration parameters for power control and resource allocation for one of a physical uplink shared channel, a physical uplink control channel and a sounding reference symbol channel;
- the limit values are accommodated in at least one system information block;
- the at least one system information block is constituted by at least one of a system information block type 5, a system information block type 5bis, and a system information block type 6.

In this connection; examples of the present invention enable one or more of the following:

- Coping with different types of coexistence challenges on the receive side and/or the transmit side, e.g. both of a base station (BS) and a terminal or user equipment (UE);
- Coping with situations where the maximum UE transmit power of the UE may have to be limited, and where the limit of the maximum UE transmit power may vary over position and width of allocations inside a frequency band, or regionally inside a nation-wide network;
- Providing a solution which allows for avoiding static solutions and limitation of coverage;
- Providing a solution to avoid increased guard bands between conflicting technologies, thus extending the useable bandwidth and spectral efficiency;
- Enabling the allocation of otherwise non-allocatable spectrum portions;
- Enabling a safe method for limiting the transmit power of specific UEs to a value lower than broadcasted $P_{max}$ valid for the complete cell;
- Guaranteeing that these selected UEs do not exceed the desired transmit power value lower than $P_{max}$, thus preventing reduction of the performance of all UEs in the cell including UEs at the cell border;
- Enabling safe power control at the TTI resolution level;
- Preventing that UE uses full power headroom for path loss compensation (despite biasing from filtering and averaging) e.g. in case a UE is close to the cell edge or in case of sudden shadowing;
- Taking into account latency in applying e.g. $P_{max2}$ as maximum transmit power, and taking into account minimum and maximum possible allocation limits depending on Power used and the sub-band used.

BRIEF DESCRIPTION OF THE DRAWINGS

Examples of the present invention are described herein below with reference to the accompanying drawings, in which:

Fig. 1 shows the principle of an example of the present invention;

Fig. 2 shows methods for power control and resource allocation according to an example of the present invention;

Fig. 3 shows apparatuses (e.g. UE 201 and BS 202) for power control and resource allocation according to an example of the present invention; and

Fig. 4 shows a data structure for power control and resource allocation according to an example of the present invention.

DETAILED DESCRIPTION OF EXAMPLES OF THE PRESENT INVENTION

Examples of the present invention are described herein below by way of example with reference to the accompanying drawings.

It is to be noted that for this description, the terms "RRC SYSTEM INFORMATION message; transmitting power; and frequency band" are examples for "network control message; first network communication parameter; and second network communication parameter", respectively, without restricting the latter-named terms to the special technical or implementation details imposed to the first-named terms.

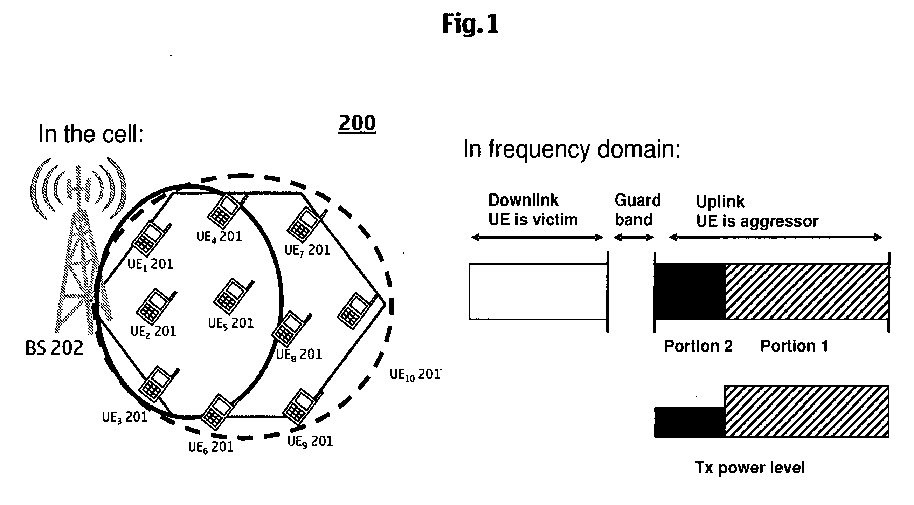

Fig. 1 shows the principle of an example of the present invention, such as a so-called coexistence situation requiring e.g. UE-specific maximum transmit power limits.

As shown in Fig. 1, a communication network 200 may comprise a base station (BS hereinafter) 202 and a plurality of user equipments (UEs hereinafter) $UE_1$ 201 to $UE_{10}$ 201. As a non-limiting example, the number N of UEs is shown to be, for example, 10.

Fig. 1 shows the coexistence situation, where UEs of a so-called "aggressor technology" (denoted by the solid and the dashed circles on the left-hand side and by the black and the hatched boxes on the right-hand side) may have to be limited e.g. in maximum transmit power to avoid interference to UEs of a so-called "victim technology" (denoted by the white box on the right-hand side).

The "aggressor technology" may correspond e.g. to LTE Rel-8 or another orthogonal frequency division multiple access (OFDMA) based technology which may allow for partial UL allocations localized in frequency dimension. As a consequence, UEs being allocated in the spectrum portion denoted by the dashed circle/hatched box may transmit e.g. with a higher output power (denoted by the hatched box, i.e. those UEs are, in the frequency domain, far away from the "victim technology") than the UEs allocated in the spectrum portion denoted by the solid circle/black box. It is to be noted that in this example, the spectrum has been split up into two parts. However, this only serves for simplicity, to which descriptive simplification the examples of the present invention are not to be restricted to; generally, the spectrum may be split into N parts, where N may be as large as reasonable with respect e.g. to UL allocation granularity and/or cell range.

As mentioned above, the min-function in the UL power control formula (see equation (1) above) rules out any output power (calculated by the UE) larger than $P_{max}$. $P_{max}$ may be used to generally limit the maximum UE transmit power for the near-far problem or tough adjacent channel leakage requirements.

However, limiting the maximum transmit power of all UEs such that the UEs situated in the solid circle do not interfere with the "victim technology", may limit the throughput and cell range as shown also in Fig. 1.

Hence, a UE-specific limitation of the maximum transmit power may be applicable. For example, a UE under good radio conditions and small path loss may be allocated in the spectrum portion denoted by the solid circle/black box when staying below a rather low limit of transmit power. A UE with high path loss or poor conditions should not be limited (at all or too much) in transmit power, and may be allocated in the spectrum portion denoted by the dashed circle/hatched box.

Hence, there is a conjunction e.g. between power control (PC) and allocation on certain parts of the frequency spectrum. Such an allocation may be handled by a scheduler.

The above equation (1) specifies the UE transmit power for PUSCH. However, the examples of the present invention are not to be limited to PUSCH, but are also applicable to PUCCH and SRS that may use the same parameter $P_{max}$.

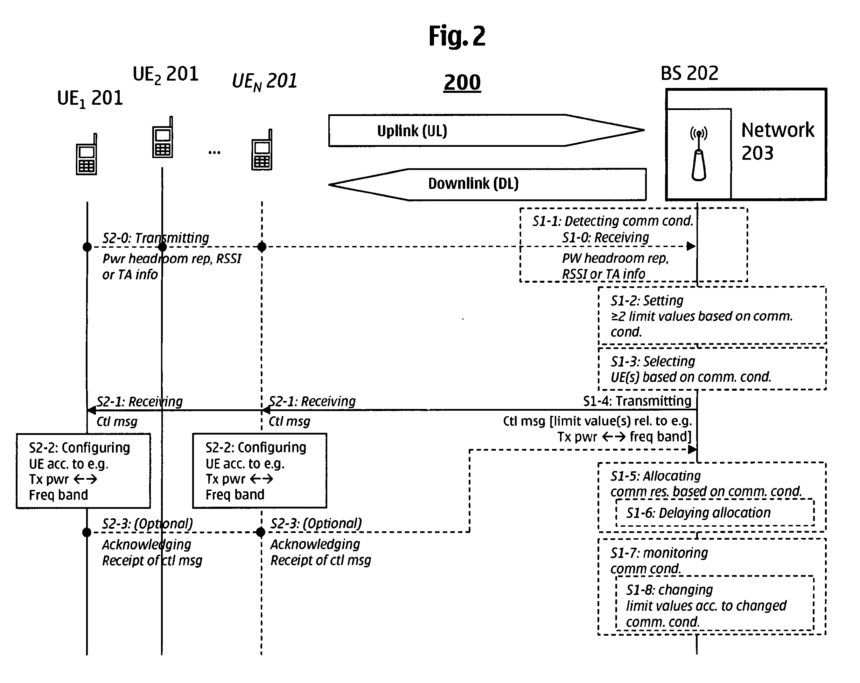

Fig. 2 shows methods for power control and resource allocation according to an example of the present invention. Signaling between elements is indicated in horizontal direction, while time aspects between signaling may be reflected in the vertical arrangement of the signaling sequence as well as in the sequence numbers. It is to be noted that the time aspects indicated in Fig. 2 do not necessarily restrict any one of the method steps shown to the step sequence outlined. This applies in particular to method steps that are functionally disjunctive with each other. Within Fig. 2, for ease of description, means or portions which may provide main functionalities are depicted with solid functional blocks or arrows and/or a normal font, while means or portions which may provide optional functions are depicted with dashed functional blocks or arrows and/or an italic font.

As for Fig. 2, means and portions identical to those in Fig. 1 are denoted by the same reference signs, and description thereof is omitted for the sake of brevity.

In an optional step S1-1, e.g. the BS 202 may perform detecting a communication condition (such as "good" or "bad" e.g. according to shadowing, path loss etc.) of each one of the plurality of terminals $UE_1$ to $UE_N$ 201. Furthermore, the detecting performed in step S1-1 may further comprise, in an optional step S1-0, receiving a power headroom report, a received signal strength indication (e.g. RSSI) or a timing advance information. The power headroom report, the received signal strength indication (e.g. RSSI) or the timing advance information may have been transmitted e.g. by each one of the UE(s) 201 in an optional step S2-0.

Then, in an optional step S1-2, e.g. the BS 202 may perform setting a plurality of limit values (e.g. for transmission power) based on the detected communication condition of the plurality of terminals.

Further, in an optional step S1-3, e.g. the BS 202 may perform selecting one or more out of the plurality of terminals UE(s) 201 based on the detected communication condition.

Then, in step S1-4, e.g. the BS 202 may perform transmitting, to each selected one of the plurality of terminals UE(s) 201, a network control message (e.g. RRC SYSTEM INFORMATION msg) comprising the plurality of limit values (e.g. $P_{max2},...,Pm_{axN}$), each of the limit values being related to a first network communication parameter (e.g. transmitting power of the respective UE) in relation to a second network communication parameter (e.g. frequency band to be used by the respective UE) and being individually set for the selected terminal, based on the detected communication condition of each one of the plurality of terminals.

Furthermore, in an optional step S1-5, e.g. the BS 202 may perform allocating a communication resource for the plurality of terminals based on the detected communication condition. Furthermore, the allocating performed in step S1-5 may further comprise, in an optional step S1-6, delaying the allocation.

Moreover, in an optional step S1-7, e.g. the BS 202 may perform monitoring the detected communication condition and may also perform, in an optional step S1-8, if the monitored communication condition has changed, changing the plurality of set limit values according to the changed communication condition.

In response to the above step S1-4, e.g. the selected UE(s) 201 may perform, in an optional step S2-1, receiving the network control message from the base station BS 202.

Then, in step S2-2, e.g. the or each UE 201 selected may perform configuring the terminal (e.g. the or each selected UE 201) according to the first network communication parameter (e.g. transmitting power of the UE 201) in relation to the second network communication parameter (e.g. frequency band to be used by the UE 201) based on the received network control message comprising the plurality of limit values, each of the limit values being related to the first network communication parameter in relation to the second network communication parameter and being individually set for the terminal.

In an optional step S2-3, e.g. the or each UE 201 selected may perform acknowledging successful receipt of the network control message to the base station BS 202.

According to further developments of the above methods according to an example of the present invention, the network control message may be a radio resource control system information message, and the radio resource control system information message may be transmitted via the physical Downlink shared channel (PDSCH). Furthermore, the set limit values may be used in an UL direction from the terminals to the base station. Still further, the first network communication parameter may be a transmitting power of each one of the plurality of terminals, and the second network communication parameter may be a frequency band to be used by each one of the plurality of terminals. Furthermore, one of the limit values (e.g. Pmax1) may be broadcast to each one of the plurality of terminals, while the remaining limit values may be set and transmitted individually in each network control message.

In addition, as implementation possibilities for the methods according to an example of the present invention, a terminal entering a cell surrounding a base station may be set to the highest available limit value. Furthermore, the limit value set for a given terminal may be set higher/lower as the detected communication condition is determined to be less/more sufficient. And, the limit value for a transmitting power set for a given terminal may be set higher/lower as a frequency band related to the limit value is determined to be further away from/to be closer to a forbidden frequency band.

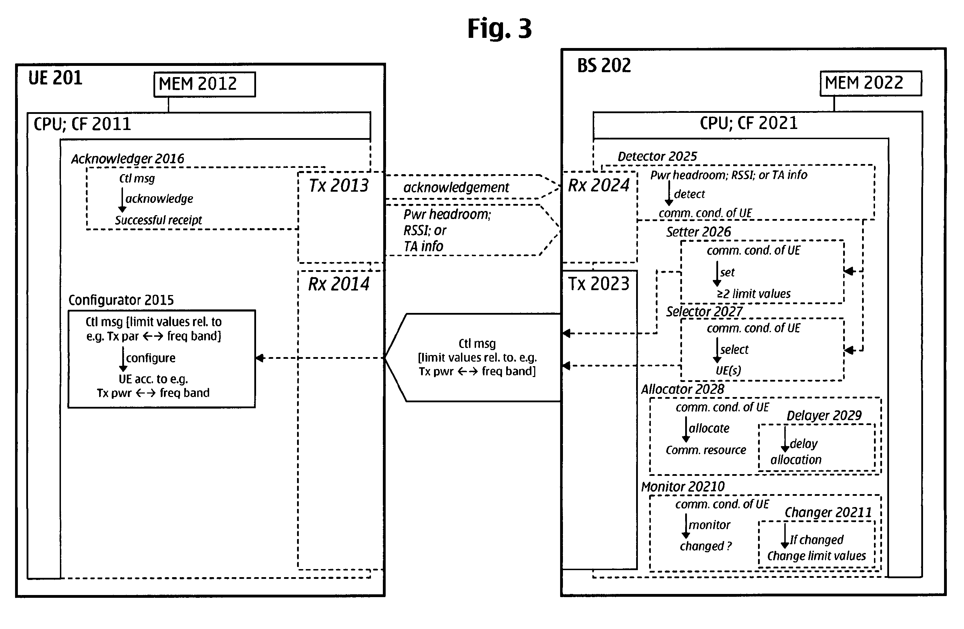

Fig. 3 shows apparatuses (e.g. UE(S) 201 and BS 202) for power control and resource allocation according to an example of the present invention. Within Fig. 3, for ease of description, means or portions which may provide main functionalities are depicted with solid functional blocks or arrows and a normal font, while means or portions which may provide optional functions are depicted with dashed functional blocks or arrows and an italic font.

The UE 201 may comprise a CPU (or core functionality CF) 2011, a memory 2012, an optional transmitter (or means for transmitting) 2013, an optional receiver (or means for receiving) 2014, a configurator (or means for configuring) 2015 and an optional acknowledger (or means for acknowledging) 2016.

Further, the BS 202 may comprise a CPU (or core functionality CF) 2021, a memory 2022, a transmitter (or means for transmitting) 2023, an optional receiver (or means for receiving) 2024, an optional detector (or means for detecting) 2025, an optional setter (or means for setting) 2026, an optional selector (or means for selecting) 2027, an optional allocator (or means for allocating) 2028, an optional delayer (or means for delaying) 2029, an optional monitor (or means for monitoring) 20210 and an optional changer (or means for changing) 20211.

As indicated by the dashed extension of the functional blocks of the CPUs 2011, 2021, the means for transmitting 2013, the means for receiving 2014, the means for configuring 2015 and the means for acknowledging 2016 of the or each UE 201 as well as the means for transmitting 2023, the means for receiving 2024, the means for detecting 2025, the means for setting 2026, the means for selecting 2027, the means for allocating 2028, the means for delaying 2029, the means for monitoring 20210 and the means for changing 20211 of the BS 202 may be functionalities running on the CPUs 2011, 2021 of the UE(s) 201 and BS 202, respectively, or may alternatively be separate functional entities or means.

The CPUs 20x1 (wherein x = 1 and 2) may respectively be configured to process various data inputs and to control the functions of the memories 20x2, the means for transmitting 202x3 and the means for receiving 20x4 (and the means for configuring 2015 and the means for acknowledging 2016 of the or each UE 201 as well as the means for detecting 2025, the means for setting 2026, the means for selecting 2027, the means for allocating 2028, the means for delaying 2029, the means for monitoring 20210 and the means for changing 20211 of the BS 202). The memories 20x2 may serve e.g. for storing code means for carrying out e.g. the methods according to the first and second examples of the present invention, when run e.g. on the CPUs 20x1. It is to be noted that the means for transmitting 20x3 and the means for receiving 20x4 may alternatively be provided as respective integral transceivers. It is further to be noted that the transmitters/receivers may be implemented i) as physical transmitters/receivers for transceiving e.g. via the air interface (e.g. in case of transmitting between the UEs 201 and the BS 202), ii) as routing entities e.g. for transmitting/ receiving data packets e.g. in a PS (packet switched) network (e.g. between the BS 202 and another internal network entity (not shown) when disposed as separate network entities), iii) as functionalities for writing/reading information into/ from a given memory area (e.g. in case of shared/common CPUs or memories e.g. of the BS 202 and the another internal network entity when disposed as an integral network entity), or iv) as any suitable combination of i) to iii).

Optionally, e.g. the means for detecting 2025 of the BS 202 may perform detecting a communication condition (such as "good" or "bad" e.g. according to shadowing, path loss etc.) of each one of the plurality of terminals $UE_1$ to $UE_N$ 201. Furthermore, the means for detecting 2025 may further comprise means for receiving 2024 of a power headroom report, a received signal strength indication (e.g. RSSI) or a timing advance information. Optionally, the power headroom report, the received signal strength indication (e.g. RSSI) or the timing advance information may have been transmitted e.g. by means for transmitting 2013 of the or each UE 201.

Then, optionally, e.g. the means for setting 2026 of the BS 202 may perform setting a plurality of limit values (e.g. for transmission power) based on the detected communication condition of the plurality of terminals.

Further optionally, e.g. the means for selecting 2027 of the BS 202 may perform selecting one or more out of the plurality of terminals UE(s) 201 based on the detected communication condition.

Then, e.g. the means for transmitting 2023 of the BS 202 may perform transmitting, to each selected one of the plurality of terminals UE(s) 201, a network control message (e.g. RRC SYSTEM INFORMATION msg) comprising the plurality of limit values (e.g. $P_{max2}$,..., $P_{maxN}$), each of the limit values being related to a first network communication parameter (e.g. transmitting power of the respective UE) in relation to a second network communication parameter (e.g. frequency band to be used by the respective UE) and being individually set for the selected terminal, based on the detected communication condition of each one of the plurality of terminals.

Furthermore, optionally, e.g. the means for allocating 2028 of the BS 202 may perform allocating a communication resource for the plurality of terminals based on the detected communication condition. Furthermore, the means for allocating 2028 may further comprise means for delaying 2029 for delaying the allocation.

Moreover, optionally, e.g. the means for monitoring 20210 of the BS 202 may perform monitoring the detected communication condition, and may also comprise the means for changing 20211 for changing, if the monitored communication condition has changed, the plurality of set limit values according to the changed communication condition.

In response to the transmitting performed by the means for transmitting 2023 of the BS 202, e.g. means for receiving 2014 of the selected UE(s) 201 may perform receiving the network control message from the base station BS 202.

Then, e.g. the means for configuring 2015 of the or each UE 201 selected may perform configuring the terminal (e.g. the or each selected UE 201) according to the first network communication parameter (e.g. transmitting power of the UE 201) in relation to the second network communication parameter (e.g. frequency band to be used by the UE 201) based on the received network control message comprising the plurality of limit values, each of the limit values being related to the first network communication parameter in relation to the second network communication parameter and being individually set for the terminal.

Optionally, e.g. the means for acknowledging 2016 of the or each UE 201 selected may perform acknowledging successful receipt of the network control message to the base station BS 202. To this end, the means for acknowledging 2016 may make use of the means for transmitting 2013 of the UE 201 in question.

According to further developments of the above apparatuses according to an example of the present invention, the network control message may be a radio resource control system information message, and the radio resource control system information message may be transmitted via a physical downlink shared channel (PDSCH The radio resource control system information message refers to configuration parameters for power control and resource allocation for the PUSCH, PUCCH, and SRS channels. Furthermore, the set power limit values may be used in an UL direction from the terminals to the base station. Still further, the first network communication parameter may be a transmitting power of each one of the plurality of terminals, and the second network communication parameter may be a frequency band to be used by each one of the plurality of terminals. Furthermore, one of the limit values (e.g. Pmax1) may be broadcast to each one of the plurality of terminals, while the remaining limit values may be set and transmitted individually in each network control message.

In addition, as implementation possibilities for the apparatuses according to an example of the present invention, a terminal entering a cell surrounding a base station may be set to the highest available limit value. Furthermore, the limit value set for a given terminal may be set higher/lower as the detected communication condition is determined to be less/more sufficient. And, the limit value for a transmitting power set for a given terminal may be set higher/lower as a frequency band related to the limit value is determined to be further away from/to be closer to a forbidden frequency band.

Furthermore, at least one of, or more of means for transmitting 2013, 2023, means for selecting 2027, means for setting 2026, means for detecting 2025, means for receiving 2014, 2024, means for allocating 2028, means for delaying 2029, means for monitoring 20210, means for changing 20211, means for configuring 2015, means for acknowledging 2016, the UE(s) 201 and/or the BS 202, or the respective functionalities carried out, may be implemented as a chipset or module.

Finally, the present invention also relates to a system which may comprise at least one UE 201 and a BS 202 according to the above-described example of the present invention.

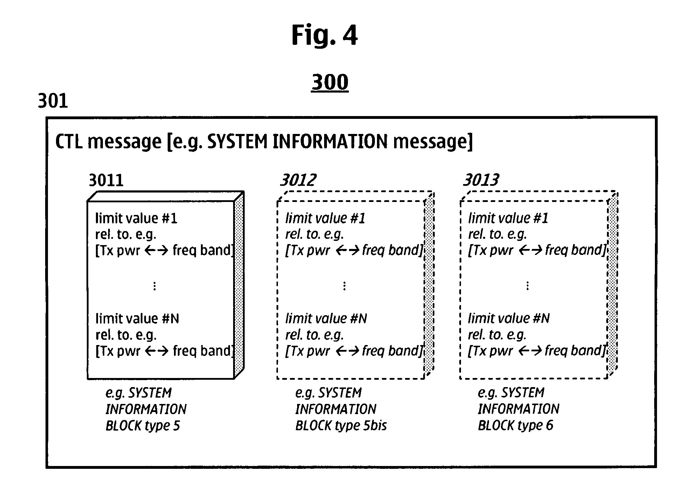

Still further, as shown in Fig. 4, an example of the present invention may also comprise a data structure for implementing the functionalities carried out.

That is, as shown in Fig. 4, a data structure 300 may comprise a network control message 301 (e.g. RRC SYSTEM INFORMATION msg) comprising a plurality of limit values ($P_{max2},...,P_{maxN}$), each of the limit values being related to a first network communication parameter (e.g. transmitting power) in relation to a second network communication parameter (e.g. frequency band to be used) and being individually set for a selected terminal.

According to further developments of the example, the data structure may be modified such that the network control message may be a radio resource control system information message 301. Further, the radio resource control system information message 301 may be transmitted via a physical downlink shared channel (PDSCH). The radio resource control system information message refers to configuration parameters for power control and resource allocation for the PUSCH, PUCCH, and SRS channels. Still further, the limit values may be accommodated in at least one system information block 3011, 3012, 3013, and the at least one system information block may be constituted by a system information block type 5, a system information block type 5bis, and/or a system information block type 6.

Without being restricted to the details following in this section, the embodiment of the present invention may be summarized as follows:

The invention may consist in a novel structured power control scheme which allows for safely setting UE-specific (different) maximum UE transmit power limits depending on frequency allocation. Power limits shall be given in absolute numbers or given as relative (differential numbers) per frequency sub-band. On top of this, power control and scheduler work together to guarantee the power and allocation limits per sub-band.

Sub-band specific power levels shall be either broadcast or better submitted resource efficient via dedicated RRC messages to only those UEs which are concerned.

The basic solution may consist of substituting the Uplink power control broadcast information in the *SystemInformationBlock* for a single maximum UE transmit power limit $P_{max}$ with a finite set of maximum UE transmit power limits in dBm $\{P_{max1}, P_{max2}, ..., P_{maxN}\}$.

For simplicity reasons, the novel power control scheme is explained using two maximum power levels $\{P_{max1}, P_{max2}\}$ only:

1. The cell is configured with 2 different maximum UE transmit power limits $\{P_{max1}, P_{max2}\}$. Assumption is that Pmax1 is broadcast and Pmax2 is UE specifically submitted by dedicated message.

2. A UE entering the LTE cell has received broadcast and sets $P_{max} = P_{max1}$, for the example in Figure 1.

3. A UE entering the LTE cell is never allocated in Spectrum Portion 2 implying the lower maximum power limit $P_{max2}$. This provides good coverage for cell edge users. Allocation is handled by scheduler.

4. From the power headroom reports or other means like RSSI or Timing Advance, the base station calculates which UEs are in good conditions and will survive a tough maximum power limit ($P_{max2}$) and which UEs are in bad conditions and should have a relaxed maximum power limit ($P_{max1}$).

5. The base station signals $P_{max2} < P_{max1}$ over RRC layer to UEs in good shape only.

6. The good shape UE shall use $P_{max} = min\{P_{max1}, P_{max2}\} = P_{max2}$ in its power control formulae for PUSCH, PUCCH, and SRS.

7. The UE is only connected if RRC message was successful. As an alternative implementation, the UE might acknowledge the new RRC value setting.

8. After a defined delay, the base station scheduler can allocate UEs in good shape now also in spectrum Portion 2 as the UE will apply $P_{max2}$ in its power control formula and hence not interfere with the coexisting technology. The delay takes into account latency in applying $P_{max2}$ as maximum transmit power. The scheduler takes into account minimum and maximum possible allocation limits depending on Power used and the sub-band used.

9. The base station constantly monitors the status of

the UEs. As soon as a UE which has been in good shape sees worse conditions, the base station signals $P_{max1}$ over RRC layer and instantaneously allocates the UE in spectrum Portion 1. Triggering points to identify worse conditions might be e.g. evaluation of power headroom reports, RSSI measurements or Timing Advance information.

In other words, the steps of the invention may be:

- Introduction of new UE and allocation specific parameters $P_{max1}$, ..., $P_{maxN}$ to be configured by the operator.
- Sub-band specific power levels are either broadcast or submitted via dedicated RRC.
- Maximum transmit power applied by the UE to be defined by $P_{max}$ = min $\{P_{max1}, ..., P_{maxN}\}$.
- Identification of UEs that are suited for operation at reduced transmit power.
- Separation of the frequency spectrum into two or more parts (up to N bands).
- In conjunction to the power also minimum and maximum allocation limits can be defined per sub-band (up to N bands).
- Dedicated signaling of a new maximum transmit power to identified UEs depending on preferred allocation sub-band.
- In case of resource bottlenecks allocation of resources to identified UEs from the band adjacent to coexistence spectrum by using lower maximum transmit power.
- In wireless networks characterized by coexistence problems with other wireless technologies the whole frequency spectrum can still be utilized. Interference is avoided by reducing the maximum transmit power for critical frequencies to a lower value signaled to the UE via RRC.
- Continuous monitoring and identification of UEs that are no longer suited for operation at reduced maximum transmit power. RRC signaling of new maximum transmit power (typically identical to broadcast value).
- The reduced power commanded shall be applied to uplink and potentially also for downlink.

This invention provides a flexible mechanism to handle coexistence situations with other wireless technologies.

[Further examples]

For the purpose of the present invention as described herein above, it should be noted that

- an access technology may be any technology by means of which a user equipment can access an access network (or base station, respectively). Any present or future technology, such as WiMAX (Worldwide Interoperability for Microwave Access) or WLAN (Wireless Local Access Network), BlueTooth, Infrared, and the like may be used; although the above technologies are mostly wireless access technologies, e.g. in different radio spectra, access technology in the sense of the present invention may also imply wirebound technologies, e.g. IP based access technologies like cable networks or fixed line.
- a network may be any device, unit or means by which a station entity or other user equipment may connect to and/or utilize services offered by the access network; such services include, among others, data and/or (audio-) visual communication, data download etc.;
- generally, the present invention may be applicable in those network/user equipment environments relying on a data packet based transmission scheme according to which data are transmitted in data packets and which are, for example, based on the Internet Protocol IP. The present invention is, however, not limited thereto, and any other present or future IP or mobile IP (MIP) version, or, more generally, a protocol following similar principles as (M) IPv4/6, is also applicable;
- a user equipment may be any device, unit or means by which a system user may experience services from an access network;
- method steps likely to be implemented as software code portions and being run using a processor at a network element or terminal (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, units or means likely to be implemented as hardware components at the above-defined apparatuses, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may alternatively be based on any security architecture capable e.g.

of authentication, authorization, keying and/or traffic protection;

- devices, units or means (e.g. the above-defined apparatuses, or any one of their respective means) can be implemented as individual devices, units or means, but this does not exclude that they are implemented in a distributed fashion throughout the system, as long as the functionality of the device, unit or means is preserved;

- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;

- a device may be regarded as an apparatus or as an assembly of more than one apparatus, whether functionally in cooperation with each other or functionally independently of each other but in a same device housing, for example.

Although the present invention has been described herein before with reference to particular embodiments thereof, the present invention is not limited thereto and various modification can be made thereto.

For ease of clarity, the following table provides a survey of the abbreviations partially used in the above description. It is to be noted that an "s" following an abbreviation represents the plural of that abbreviation, e.g. "UEs" represents "user equipments".

| | |
|---|---|
| 3GPP(2) | 3$^{rd}$ generation partnership project(2) |
| 2G/3G | 2$^{nd}$ generation/3$^{rd}$ generation |
| GSM | Global System for Mobile communication Enhanced Data rates for Global Evolution |
| EDGE | |
| CDMA | Code Division Multiple Access |
| WCDMA | Wideband CDMA |
| TR/TS | Technical report/technical specification |
| UE | User equipment |
| BS | Base station |
| CS | Circuit switched |
| PS | Packet switched |
| UL | Uplink |
| DL | Downlink |
| LTE | Long Term Evolution of 3GPP standard |
| LTE Rel-8 | LTE Release 8 currently being standardized |
| OFDM | Orthogonal Frequency Division Multiplex |
| SEM | Spectrum emission mask |
| ACLR | Adjacent channel leakage requirement |
| PUSCH | Physical Uplink Shared Channel |
| PUCCH | Physical Uplink Control Channel |
| PRACH | Physical Random Access Channel |
| SRS | Sounding reference symbol |
| TTI | Transmission time interval |
| RRC | Radio resource control |
| PC | Power control |

**Claims**

1. A method, comprising:

   transmitting, to each selected one of a plurality of terminals, a network control message comprising a plurality of limit values, each of the limit values being related to a first network communication parameter in relation to a second network communication parameter and being individually set for the selected terminal, based on a detected communication condition of each one of the plurality of terminals.

2. The method according to claim 1, further comprising selecting one or more out of the plurality of terminals based on the detected communication condition; or setting the plurality of limit values based on the detected communication condition of the plurality of terminals.

3. The method according to claim 1, further comprising detecting the communication condition of each one of the plurality of terminals.

4. A method, comprising:

configuring a terminal according to a first network communication parameter in relation to a second network communication parameter based on a received network control message comprising a plurality of limit values, each of the limit values being related to the first network communication parameter in relation to the second network communication parameter and being individually set for the terminal.

5. The method according to claim 4, further comprising receiving the network control message from a base station.

6. The method according to claim 5, further comprising acknowledging successful receipt of the network control message to the base station.

7. The method according to claim 1 or 4, wherein at least one of the following applies:

the network control message is a radio resource control system information message;
the radio resource control system information message is transmitted via a physical downlink shared channel;
the radio resource control system information message refers to configuration parameters for power control and resource allocation for the physical uplink shared channel, physical uplink control channel, and sounding reference symbol channels;
the set limit values are used in an uplink direction from the terminals to a base station;
the first network communication parameter is a transmitting power of each one of the plurality of terminals;
the second network communication parameter is a frequency band to be used by each one of the plurality of terminals;
one of the limit values is broadcast to each one of the plurality of terminals, and the remaining limit values are set and transmitted individually in each network control message;
a terminal entering a cell surrounding a base station is set to the highest available limit value;
the limit value set for a given terminal is set higher as the detected communication condition is determined to be less sufficient;
the limit value set for a given terminal is set lower as the detected communication condition is determined to be more sufficient;
the limit value for a transmitting power set for a given terminal is set higher as a frequency band related to the limit value is determined to be further away from a forbidden frequency band; and
the limit value for a transmitting power set for a given terminal is set lower as a frequency band related to the limit value is determined to be closer to a forbidden frequency band.

8. An apparatus, comprising:

means for transmitting, to each selected one of a plurality of terminals, a network control message comprising a plurality of limit values, each of the limit values being related to a first network communication parameter in relation to a second network communication parameter and being individually set for the selected terminal, based on a detected communication condition of each one of the plurality of terminals.

9. The apparatus according to claim 8, further comprising means for selecting one or more out of the plurality of terminals based on the detected communication condition; or means for setting the plurality of limit values based on the detected communication condition of the plurality of terminals.

10. The apparatus according to claim 8, further comprising means for detecting the communication condition of each one of the plurality of terminals.

11. An apparatus, comprising:

means for configuring a terminal according to a first network communication parameter in relation to a second network communication parameter based on a received network control message comprising a plurality of limit values, each of the limit values being related to the first network communication parameter in relation to the second network communication parameter and being individually set for the terminal.

**12.** The apparatus according to claim 11, further comprising means for receiving the network control message from a base station.

**13.** The apparatus according to claim 12, further comprising means for acknowledging successful receipt of the network control message to the base station.

**14.** The apparatus according to claim 8 or 11, wherein at least one of the following applies:

the network control message is a radio resource control system information message;
the radio resource control system information message is transmitted via a physical downlink shared channel (PDSCH);
The radio resource control system information message refers to configuration parameters for power control and resource allocation for the physical uplink shared channel, physical uplink control channel, and sounding reference symbol channels.
the set limit values are used in an uplink direction from the terminals to a base station;
the first network communication parameter is a transmitting power of each one of the plurality of terminals;
the second network communication parameter is a frequency band to be used by each one of the plurality of terminals;
one of the limit values is broadcast to each one of the plurality of terminals, and the remaining limit values are set and transmitted individually in each network control message;
a terminal entering a cell surrounding a base station is set to the highest available limit value;
the limit value set for a given terminal is set higher as the detected communication condition is determined to be less sufficient;
the limit value set for a given terminal is set lower as the detected communication condition is determined to be more sufficient;
the limit value for a transmitting power set for a given terminal is set higher as a frequency band related to the limit value is determined to be further away from a forbidden frequency band; and
the limit value for a transmitting power set for a given terminal is set lower as a frequency band related to the limit value is determined to be closer to a forbidden frequency band.

**15.** A computer program product comprising code means for performing a method according to any one of claims 1 to 7 when run on a processing means or module.

**Patentansprüche**

**1.** Verfahren, umfassend:

Senden einer Netz-Steuernachricht, die eine Vielzahl von Grenzwerten umfasst, zu jedem ausgewählten einer Vielzahl von Endgeräten, wobei jeder der Grenzwerte einen ersten Netz-Kommunikationsparameter in Bezug auf einen zweiten Netz-Kommunikationsparameter betrifft und einzeln für jedes ausgewählte Endgerät auf der Basis einer detektierten Kommunikationsbedingung jedes der Vielzahl von Endgeräten gesetzt wird.

**2.** Verfahren nach Anspruch 1, ferner umfassend:

Auswählen eines oder mehrerer aus der Vielzahl von Endgeräten auf der Basis der detektierten Kommunikationsbedingung; oder Setzen der Vielzahl von Grenzwerten auf der Basis der detektierten Kommunikationsbedingung der Vielzahl von Endgeräten.

**3.** Verfahren nach Anspruch 1, ferner umfassend:

Detektieren der Kommunikationsbedingung jedes einzelnen der Vielzahl von Endgeräten.

**4.** Verfahren, umfassend:

Konfigurieren eines Endgeräts gemäß einem ersten Netz-Kommunikationsparameter in Bezug auf einen zweiten Netz-Kommunikationsparameter auf der Basis einer empfangenen Netz-Steuernachricht, die eine Vielzahl von Grenzwerten umfasst, wobei jeder der Grenzwerte den ersten Netz-Kommunikationsparameter in Bezug auf den zweiten Netz-Kommunikationsparameter betrifft und einzeln für das Endgerät gesetzt wird.

5. Verfahren nach Anspruch 4, ferner umfassend:

Empfangen der Netz-Steuernachricht von einer Basisstation.

6. Verfahren nach Anspruch 5, ferner umfassend:

Bestätigen des erfolgreichen Empfangs der Netz-Steuernachricht für die Basisstation.

7. Verfahren nach Anspruch 1 oder 4, wobei mindestens eines der folgenden gilt:

die Netz-Steuernachricht ist eine Funkbetriebsmittelsteuerungs-Systeminformationsnachricht;
die Funkbetriebsmittelsteuerungs-Systeminformationsnachricht wird über einen gemeinsam benutzen physischen Abwärtsstreckenkanal gesendet;
die Funkbetriebsmittelsteuerungs-Systeminformationsnachricht bezieht sich auf Konfigurationsparameter zur Leistungsregelung und Betriebsmittelvergabe für den gemeinsam benutzten physischen Aufwärtsstreckenkanal, den physischen Aufwärtsstreckensteuerkanal und Sounding-Referenzsymbolkanäle;
die gesetzten Grenzwerte werden in einer Aufwärtsstreckenrichtung von den Endgeräten zu einer Basisstation verwendet;
der erste Netz-Kommunikationsparameter ist eine Sendeleistung jedes einzelnen der Vielzahl von Endgeräten;
der zweite Netz-Kommunikationsparameter ist ein von jedem einzelnen der Vielzahl von Endgeräten zu benutzendes Frequenzband;
einer der Grenzwerte wird an jedes einzelne der Vielzahl von Endgeräten rundgesendet und die übrigen Grenzwerte werden gesetzt und einzeln in jeder Netz-Steuernachricht gesendet;
ein Endgerät, das in eine eine Basisstation umgebende Zelle eintritt, wird auf den höchsten verfügbaren Grenzwert gesetzt;
der für ein gegebenes Endgerät gesetzte Grenzwert wird höher gesetzt, wenn bestimmt wird, dass die detektierte Kommunikationsbedingung weniger ausreichend ist;
der für ein gegebenes Endgerät gesetzte Grenzwert wird niedriger gesetzt, wenn bestimmt wird, dass die detektierte Kommunikationsbedingung ausreichender ist;
der Grenzwert für eine für ein gegebenes Endgerät gesetzte Sendeleistung wird höher gesetzt, wenn bestimmt wird, dass ein Frequenzband in Bezug auf den Grenzwert weiter von einem verbotenen Frequenzband entfernt ist; und
der Grenzwert für eine für ein gegebenes Endgerät gesetzte Sendeleistung wird niedriger gesetzt, wenn bestimmt wird, dass ein Frequenzband in Bezug auf den Grenzwert einem verbotenen Frequenzband näher ist.

8. Vorrichtung, umfassend:

Mittel zum Senden einer Netz-Steuernachricht, die eine Vielzahl von Grenzwerten umfasst, zu jedem ausgewählten einer Vielzahl von Endgeräten, wobei jeder der Grenzwerte einen ersten Netz-Kommunikationsparameter in Bezug auf einen zweiten Netz-Kommunikationsparameter betrifft und einzeln für jedes ausgewählte Endgerät auf der Basis einer detektierten Kommunikationsbedingung jedes der Vielzahl von Endgeräten gesetzt wird.

9. Vorrichtung nach Anspruch 8, ferner mit Mitteln zum Auswählen eines oder mehrerer aus der Vielzahl von Endgeräten auf der Basis der detektierten Kommunikationsbedingung; oder Mitteln zum Setzen der Vielzahl von Grenzwerten auf der Basis der detektierten Kommunikationsbedingung der Vielzahl von Endgeräten.

10. Vorrichtung nach Anspruch 8, ferner mit Mitteln zum Detektieren der Kommunikationsbedingung jedes einzelnen der Vielzahl von Endgeräten.

11. Vorrichtung, umfassend:

Mittel zum Konfigurieren eines Endgeräts gemäß einem ersten Netz-Kommunikationsparameter in Bezug auf einen zweiten Netz-Kommunikationsparameter auf der Basis einer empfangenen Netz-Steuernachricht, die eine Vielzahl von Grenzwerten umfasst, wobei jeder der Grenzwerte den ersten Netz-Kommunikationsparameter in Bezug auf den zweiten Netz-Kommunikationsparameter betrifft und einzeln für das Endgerät gesetzt wird.

**12.** Vorrichtung nach Anspruch 11, ferner mit Mitteln zum Empfangen der Netz-Steuernachricht von einer Basisstation.

**13.** Vorrichtung nach Anspruch 12, ferner mit Mitteln zum Bestätigen des erfolgreichen Empfangs der Netz-Steuernachricht für die Basisstation.

**14.** Vorrichtung nach Anspruch 8 oder 11, wobei mindestens eines der folgenden gilt:

die Netz-Steuernachricht ist eine Funkbetriebsmittelsteuerungs-Systeminformationsnachricht;
die Funkbetriebsmittelsteuerungs-Systeminformationsnachricht wird über einen gemeinsam benutzen physischen Abwärtsstreckenkanal (PDSCH) gesendet;
die Funkbetriebsmittelsteuerungs-Systeminformationsnachricht bezieht sich auf Konfigurationsparameter zur Leistungsregelung und Betriebsmittelvergabe für den gemeinsam benutzten physischen Aufwärtsstreckenkanal, den physischen Aufwärtsstreckensteuerkanal und Sounding-Referenzsymbolkanäle;
die gesetzten Grenzwerte werden in einer Aufwärtsstreckenrichtung von den Endgeräten zu einer Basisstation verwendet;
der erste Netz-Kommunikationsparameter ist eine Sendeleistung jedes einzelnen der Vielzahl von Endgeräten;
der zweite Netz-Kommunikationsparameter ist ein von jedem einzelnen der Vielzahl von Endgeräten zu benutzendes Frequenzband;
einer der Grenzwerte wird an jedes einzelne der Vielzahl von Endgeräten rundgesendet und die übrigen Grenzwerte werden gesetzt und einzeln in jeder Netz-Steuernachricht gesendet;
ein Endgerät, das in eine eine Basisstation umgebende Zelle eintritt, wird auf den höchsten verfügbaren Grenzwert gesetzt;
der für ein gegebenes Endgerät gesetzte Grenzwert wird höher gesetzt, wenn bestimmt wird, dass die detektierte Kommunikationsbedingung weniger ausreichend ist;
der für ein gegebenes Endgerät gesetzte Grenzwert wird niedriger gesetzt, wenn bestimmt wird, dass die detektierte Kommunikationsbedingung ausreichender ist;
der Grenzwert für eine für ein gegebenes Endgerät gesetzte Sendeleistung wird höher gesetzt, wenn bestimmt wird, dass ein Frequenzband in Bezug auf den Grenzwert weiter von einem verbotenen Frequenzband entfernt ist; und
der Grenzwert für eine für ein gegebenes Endgerät gesetzte Sendeleistung wird niedriger gesetzt, wenn bestimmt wird, dass ein Frequenzband in Bezug auf den Grenzwert einem verbotenen Frequenzband näher ist.

**15.** Computerprogrammprodukt mit Codemitteln zum Ausführen eines Verfahrens nach einem der Ansprüche 1 bis 7, wenn sie auf einem Verarbeitungsmittel oder -modul ausgeführt werden.

**Revendications**

**1.** Un procédé, comprenant :

la transmission, à chaque terminal sélectionné d'une pluralité de terminaux, d'un message de commande de réseau comprenant une pluralité de valeurs limites, chacune des valeurs limites étant reliée à un premier paramètre de communication de réseau en relation avec un deuxième paramètre de communication de réseau et étant définie individuellement pour le terminal sélectionné en fonction d'un état de communication détecté de chacun des terminaux de la pluralité de terminaux.

**2.** Le procédé selon la revendication 1, comprenant en outre la sélection d'un ou plusieurs terminaux de la pluralité de terminaux en fonction de l'état de communication détecté, ou la définition de la pluralité de valeurs limites en fonction de l'état de communication détecté de la pluralité de terminaux.

**3.** Le procédé selon la revendication 1, comprenant en outre la détection de l'état de communication de chacun des terminaux de la pluralité de terminaux.

**4.** Un procédé, comprenant :

la configuration d'un terminal selon un premier paramètre de communication de réseau en relation avec un deuxième paramètre de communication de réseau en fonction d'un message de commande de réseau reçu comprenant une pluralité de valeurs limites, chacune des valeurs limites étant reliée au premier paramètre de communication de réseau en relation avec le deuxième paramètre de communication de réseau et étant définie individuellement pour le terminal.

5. Le procédé selon la revendication 4, comprenant en outre la réception du message de commande de réseau provenant d'une station de base.

6. Le procédé selon la revendication 5, comprenant en outre l'envoi d'un accusé de réception réussie du message de commande de réseau à la station de base.

7. Le procédé selon la revendication 1 ou 4, dans lequel au moins une des situations suivantes s'applique :

le message de commande de réseau est un message d'information de système de commande de ressources radio,
le message d'information de système de commande de ressources radio est transmis par l'intermédiaire d'un canal partagé en liaison descendante physique,
le message d'information de système de commande de ressources radio fait référence à des paramètres de configuration pour une commande de puissance et une attribution de ressources pour le canal partagé en liaison montante physique, le canal de commande en liaison montante physique et des canaux de symboles de référence de sondage,
les valeurs limites définies sont utilisées dans une direction en liaison montante à partir des terminaux vers une station de base,
le premier paramètre de communication de réseau est une puissance de transmission de chacun des terminaux de la pluralité de terminaux,
le deuxième paramètre de communication de réseau est une bande de fréquence à utiliser par chaque terminal de la pluralité de terminaux,
une des valeurs limites est radiodiffusée à chaque terminal de la pluralité de terminaux, et les valeurs limites restantes sont définies et transmises individuellement dans chaque message de commande de réseau,
un terminal entrant dans une cellule entourant une station de base est réglé sur la valeur limite disponible la plus élevée,
la valeur limite définie pour un terminal donné est réglée sur une valeur plus élevée si l'état de communication détecté est déterminé être moins suffisant,
la valeur limite définie pour un terminal donné est réglée sur une valeur plus basse si l'état de communication détecté est déterminé être plus suffisant,
la valeur limite pour une puissance de transmission définie pour un terminal donné est réglée sur une valeur plus élevée si une bande de fréquence reliée à la valeur limite est déterminée être plus éloignée d'une bande de fréquence interdite, et
la valeur limite pour une puissance de transmission définie pour un terminal donné est réglée sur une valeur plus basse si une bande de fréquence reliée à la valeur limite est déterminée être plus proche d'une bande de fréquence interdite.

8. Un appareil, comprenant :

un moyen de transmission, à chaque terminal sélectionné d'une pluralité de terminaux, d'un message de commande de réseau comprenant une pluralité de valeurs limites, chacune des valeurs limites étant reliée à un premier paramètre de communication de réseau en relation avec un deuxième paramètre de communication de réseau et étant définie individuellement pour le terminal sélectionné en fonction d'un état de communication détecté de chacun des terminaux de la pluralité de terminaux.

9. L'appareil selon la revendication 8, comprenant en outre un moyen de sélection d'un ou plusieurs terminaux de la pluralité de terminaux en fonction de l'état de communication détecté, ou un moyen de définition de la pluralité de valeurs limites en fonction de l'état de communication détecté de la pluralité de terminaux.

10. L'appareil selon la revendication 8, comprenant en outre un moyen de détection de l'état de communication de chacun des terminaux de la pluralité de terminaux.

11. Un appareil, comprenant :

un moyen de configuration d'un terminal selon un premier paramètre de communication de réseau en relation avec un deuxième paramètre de communication de réseau en fonction d'un message de commande de réseau reçu comprenant une pluralité de valeurs limites, chacune des valeurs limites étant reliée au premier paramètre de communication de réseau en relation avec le deuxième paramètre de communication de réseau et étant définie individuellement pour le terminal.

12. L'appareil selon la revendication 11, comprenant en outre un moyen de réception du message de commande de réseau provenant d'une station de base.

13. L'appareil selon la revendication 12, comprenant en outre un moyen d'envoi d'un accusé de réception réussie du message de commande de réseau à la station de base.

14. L'appareil selon la revendication 8 ou 11, dans lequel au moins une des situations suivantes s'applique :

le message de commande de réseau est un message d'information de système de commande de ressources radio,

le message d'information de système de commande de ressources radio est transmis par l'intermédiaire d'un canal partagé en liaison descendante physique (PDSCH),

Le message d'information de système de commande de ressources radio fait référence à des paramètres de configuration pour une commande de puissance et une attribution de ressources pour le canal partagé en liaison montante physique, le canal de commande en liaison montante physique et des canaux de symboles de référence de sondage.

les valeurs limites définies sont utilisées dans une direction en liaison montante à partir des terminaux vers une station de base,

le premier paramètre de communication de réseau est une puissance de transmission de chacun des terminaux de la pluralité de terminaux,

le deuxième paramètre de communication de réseau est une bande de fréquence à utiliser par chaque terminal de la pluralité de terminaux,

une des valeurs limites est radiodiffusée à chaque terminal de la pluralité de terminaux et les valeurs limites restantes sont définies et transmises individuellement dans chaque message de commande de réseau,

un terminal entrant dans une cellule entourant une station de base est réglé sur la valeur limite disponible la plus élevée,

la valeur limite définie pour un terminal donné est réglée sur une valeur plus élevée si l'état de communication détecté est déterminé être moins suffisant,

la valeur limite définie pour un terminal donné est réglée sur une valeur plus basse si l'état de communication détecté est déterminé être plus suffisant,

la valeur limite pour une puissance de transmission définie pour un terminal donné est réglée sur une valeur plus élevée si une bande de fréquence reliée à la valeur limite est déterminée être plus éloignée d'une bande de fréquence interdite, et

la valeur limite pour une puissance de transmission définie pour un terminal donné est réglée sur une valeur plus basse si une bande de fréquence reliée à la valeur limite est déterminée être plus proche d'une bande de fréquence interdite.

15. Un produit de programme informatique comprenant un moyen de code destiné à exécuter un procédé selon l'une quelconque des Revendications 1 à 7 lorsqu'il est exécuté sur un moyen ou un module de traitement.

## Fig. 1

**In the cell:**                                    **200**

**In frequency domain:**

BS 202

UE₁ 201, UE₂ 201, UE₃ 201, UE₄ 201, UE₅ 201, UE₆ 201, UE₇ 201, UE₈ 201, UE₉ 201, UE₁₀ 201

Downlink
UE is victim

Guard
band

Uplink
UE is aggressor

Portion 2     Portion 1

Tx power level

EP 2 364 566 B1

# Fig. 2

UE₁ 201  UE₂ 201  UEₙ 201  **200**  BS 202

Uplink (UL)

Downlink (DL)

Network 203

*S1-1: Detecting comm cond.*
*S2-0: Transmitting*  *S1-0: Receiving*
*Pwr headroom rep, RSSI*  *PW headroom rep,*
*or TA info*  *RSSI or TA info*

*S1-2: Setting*
*≥2 limit values based on comm. cond.*

*S1-3: Selecting*
*UE(s) based on comm. cond.*

*S2-1: Receiving*  *S2-1: Receiving*  S1-4: Transmitting
*Ctl msg*  *Ctl msg*  Ctl msg [limit value(s) rel. to e.g. Tx pwr ←→ freq band]

S2-2: Configuring UE acc. to e.g. Tx pwr ←→ Freq band

S2-2: Configuring UE acc. to e.g. Tx pwr ←→ Freq band

*S1-5: Allocating*
*comm res. based on comm. cond.*

*S1-6: Delaying allocation*

*S2-3: (Optional)*  *S2-3: (Optional)*
*Acknowledging*  *Acknowledging*
*Receipt of ctl msg*  *Receipt of ctl msg*

*S1-7: monitoring*
*comm cond.*

*S1-8: changing*
*limit values acc. to changed*
*comm. cond.*

EP 2 364 566 B1

# Fig. 3

# Fig. 4

## 300

301

CTL message [e.g. SYSTEM INFORMATION message]

3011

limit value #1
rel. to. e.g.
[Tx pwr ←→ freq band]

⋮

limit value #N
rel. to. e.g.
[Tx pwr ←→ freq band]

*e.g. SYSTEM
INFORMATION
BLOCK type 5*

*3012*

*limit value #1
rel. to. e.g.
[Tx pwr ←→ freq band]*

⋮

*limit value #N
rel. to. e.g.
[Tx pwr ←→ freq band]*

*e.g. SYSTEM
INFORMATION
BLOCK type 5bis*

*3013*

*limit value #1
rel. to. e.g.
[Tx pwr ←→ freq band]*

⋮

*limit value #N
rel. to. e.g.
[Tx pwr ←→ freq band]*

*e.g. SYSTEM
INFORMATION
BLOCK type 6*